Europäisches Patentamt

(19) European Patent Office

Office européen des brevets

(11) Numéro de publication: **0 1 18 355**
**B1**

(12) **FASCICULE DE BREVET EUROPEEN**

(45) Date de publication du fascicule du brevet:
**19.11.87**

(51) Int. Cl.⁴: **G 21 C 3/32**

(21) Numéro de dépôt: **84400371.5**

(22) Date de dépôt: **24.02.84**

(54) Assemblage combustible pour un réacteur nucléaire.

(30) Priorité: **25.02.83 FR 8303154**

(43) Date de publication de la demande:
**12.09.84 Bulletin 84/37**

(45) Mention de la délivrance du brevet:
**19.11.87 Bulletin 87/47**

(84) Etats contractants désignés:
**AT BE CH DE GB IT LI SE**

(56) Documents cités:
**EP - A - 0 048 343**
**EP - A - 0 049 667**
**DE - A - 2 742 692**
**FR - A - 2 368 785**

(73) Titulaire: **Framatome, Tour Fiat 1 place de la Coupole,
F-92400 Courbevoie (FR)**

(72) Inventeur: **Millot, Jean-Paul, 1 Allée des Roitelets,
F-78340 Elancourt (FR)**
Inventeur: **Desfontaines, Guy, 18 rue Jean Jaurès,
F-92800 Puteaux (FR)**
Inventeur: **Babin, Michel, 148 Avenue Jean Jaurès,
F-93500 Pantin (FR)**

(74) Mandataire: **Fort, Jacques, CABINET
PLASSERAUD 84, rue d'Amsterdam, F-75009 Paris (FR)**

## Description

L'invention concerne un assemblage combustible de réacteur nucléaire. Un tel assemblage, en particulier un assemblage combustible pour réacteur nucléaire à eau, est généralement constitué par un faisceau de crayons combustibles parallèles maintenus par une structure constituée par des grilles entretoises, deux embouts d'extrémité et des tubes guides reliant les grilles entretoises et les embouts. On connait un tel assemblage combustible conforme au préambule de la revendication 1, (EP-A-O 049 667) dont les crayons combustibles, de forme cylindrique et de grande longueur, sont maintenus transversalement et axialement par les grilles entretoises. Les crayons ont une longueur inférieure à la longueur des tubes guides qui se substituent à certains crayons de l'assemblage. Les extrémités des crayons sont donc libres et situées à une certaine distance des embouts.

Pour réaliser à la fois la fixation axiale et transversale des crayons grâce aux grilles entretoises, il est nécessaire d'utiliser des ressorts exerçant une force transversale importante sur les crayons. Ces ressorts doivent être réalisés en alliage de nickel pour donner des propriétés élastiques et mécaniques suffisantes au ressort sous irradiation. Ils ont donc une forte absorption neutronique alors que, pour améliorer le rendement neutronique du coeur du réacteur, on utilise généralement un alliage de zirconium pour constituer les grilles.

On a par ailleurs proposé des assemblages dans lesquels les fonctions de maintien transversal et de maintien axial des crayons sont séparés en fixant l'une des extrémités de chacun d'eux sur l'embout inférieur de l'assemblage. Mais on complique la structure de l'embout inférieur, on rend son démontage malaisé et on diminue la section de passage du fluide primaire dans l'assemblage.

On connait enfin (DE-A-27 42 692) un assemblage dont l'embout supérieur est en deux pièces fixées l'une à l'autre et emprisonnant entre elles des reforcements des tubes guides: là encore les crayons doivent être maintenus axialement par les grilles.

Le but de l'invention est de fournir un assemblage combustible pour réacteur nucléaire dont le faisceau de crayons combustibles n'a pas à être retenu par les grilles dans le sens axial et dont les embouts restent simples et offrent une section de passage importante au fluide primaire.

L'invention propose dans ce but un assemblage conforme à la partie caractérisante de la revendication 1.

Afin de bien faire comprendre l'invention, on va maintenant décrire un assemblage combustible suivant l'invention utilisé dans le cas d'un réacteur nucléaire à rendement neutronique amélioré.

- la Figure 1 représente une vue en élévation latérale avec coupe partielle d'une partie d'un assemblage combustible suivant l'invention.

- la Figure 2 représente une vue partielle suivant CC de la figure 1.
- la Figure 3 représente une vue en coupe verticale suivant AA de la figure 2.
- la Figure 4 représente une vue en coupe suivant BB de la figure 2.

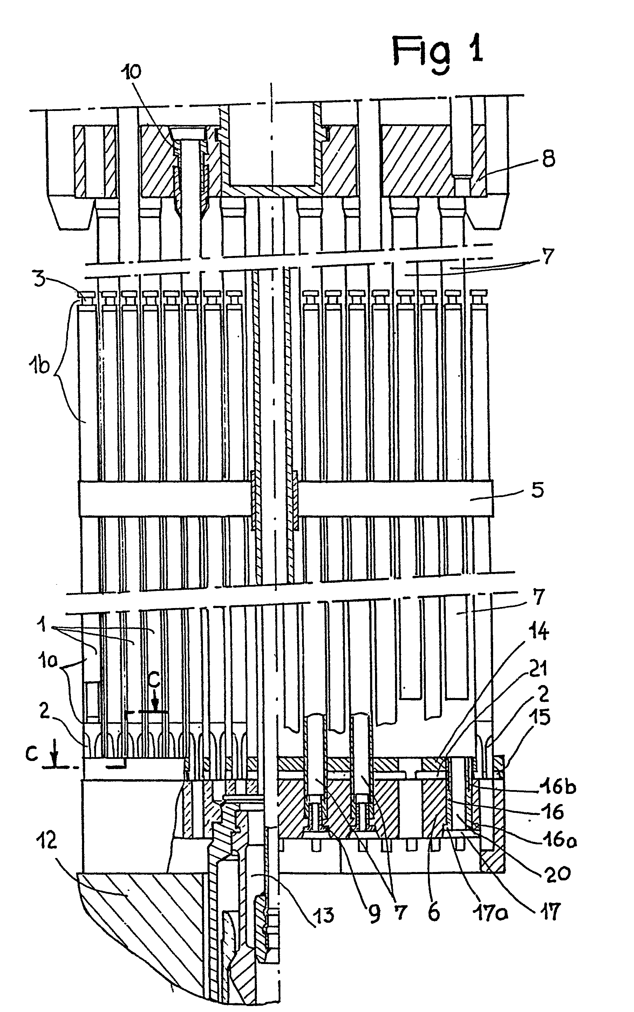

Sur la figure 1, on voit un assemblage combustible utilisé dans un réacteur nucléaire à rendement amélioré tel que décrit dans la demande de brevet EP.A 0108020 de la demanderesse.

Cet assemblage comporte un ensemble de crayons combustibles 1 constitués par un tube de gainage renfermant des pastilles de matériau combustible. Le tube est fermé à son extrémité inférieure par un bouchon 2 et à son extrémité supérieure par un bouchon 3. La zone 1a du crayon située juste au-dessus du bouchon inférieur 2 est remplie de matériau fertile remplaçant le matériau combustible fissile remplissant la zone médiane du crayon. Il en est de même de la zone 1b située en-dessous du bouchon supérieur 3 du crayon.

On constitue ainsi dans chacun des assemblages et pour tout le coeur, une couverture supérieure et une couverture inférieure de matériau fertile permettant d'améliorer le rendement neutronique du réacteur comme il est décrit dans la demande de brevet EP.A 0108020.

Les crayons 1 sont maintenus dans une structure constituée par des grilles entretoises 5 de maintien transversal des crayons 1, l'embout inférieur 6, l'embout supérieur 8 et les tubes guides 7 reliés aux grilles 5 et fixés à l'une de leurs extrémités sur l'embout inférieur 6 et à leurs autres extrémités sur l'embout supérieur 8. Les tubes guides 7 assurent ainsi le maintien et la rigidité de la structure de support des crayons 1.

Les tubes guides 7 sont fixés dans des orifices traversant les embouts 6 et 8, par une partie d'extrémité taraudée sur laquelle on peut engager la partie filetée d'une douille 9 (pour l'embout inférieur) ou 10 (pour l'embout supérieur).

Après vissage des douilles 9 et 10 dans les extrémités taraudées des tubes guides 7, on réalise le blocage en rotation de ces douilles.

L'assemblage combustible est fixé par sa partie inférieure sur la plaque inférieure de coeur 12 par un dispositif à commande centrale 13 représenté sommairement sur la figure 1.

Ce dispositif de fixation de la partie inférieure de l'assemblage a fait l'objet de la demande de brevet EP-A 0 081 431 de la Société FRAMATOME.

En se reportant aux figures 1, 2, 3 et 4, on va maintenant décrire le dispositif de fixation de la partie inférieure des crayons combustibles sur l'embout inférieur 6.

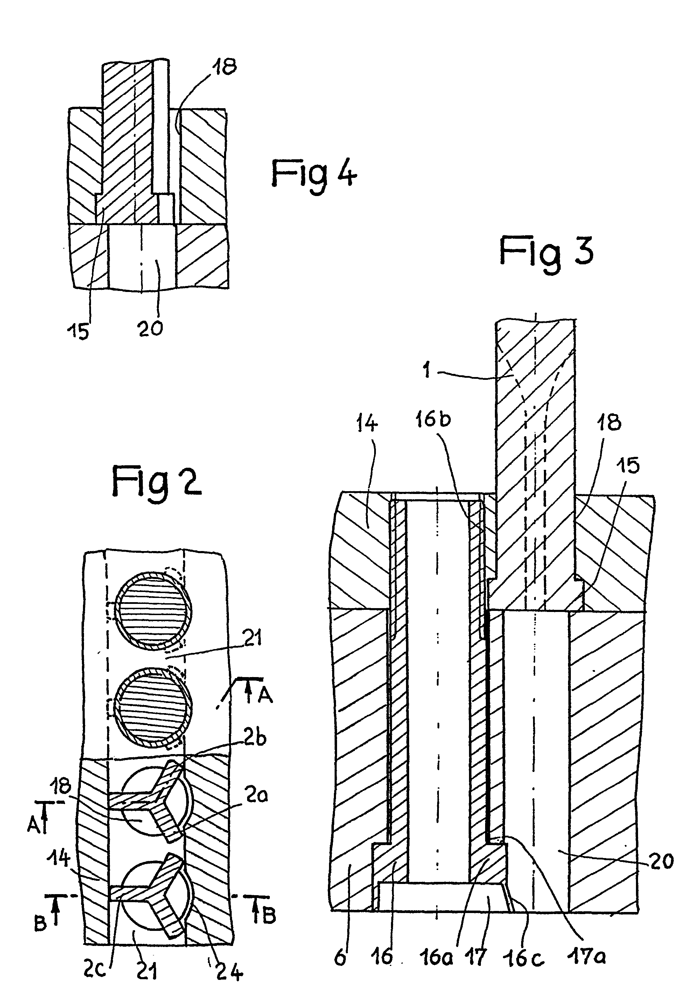

Le bouchon inférieur 2 des crayons combustibles est usiné sur la plus grande partie de sa longueur suivant une section visible sur la figure 2 présentant trois branches radiales $2_a$, $2_b$ et $2_c$ à 120°. Chacune des expansions radiales correspondant aux branches $2_a$, $2_b$ et $2_c$ comporte de plus à sa partie inférieure en rebord 15 en saillie par rapport à la section circulaire du crayon dans sa partie cylindrique dans laquelle s'inscrit la section du bouchon, à l'exception des parties saillantes dans la direction radiale 15.

Une plaque de fixation 14 vient reposer par sa face inférieure sur la face supérieure de l'embout 6 sur lequel cette plaque 14 est fixée par des douilles creuses filetées 16 engagées dans des lumières 17 traversant l'embout inférieur 6. Chacune des lumières 17 comporte un épaulement 17$_a$ sur lequel vient en appui la tête 16$_a$ de la douille 16.

La partie filetée 16$_b$ de la douille 16 vient se visser dans un trou taraudé ménagé dans la plaque 14 dans le prolongement de la lumière 17 de l'embout 6. Après vissage de la douille 16, on effectue son blocage en rotation par déformation d'une collerette supérieure 16$_c$ prolongeant la tête 16$_a$ de la douille, dans les embrèvements prévus à l'entrée de la lumière 17.

On peut ainsi fixer de façon parfaitement stable la plaque 14 sur l'embout 6.

La plaque 14 comporte des orifices 18 d'un diamètre sensiblement égal au diamètre de la partie cylindrique des crayons combustibles 1 et dans des positions correspondant aux positions des crayons du faisceau. Dans le prolongement de chacun des crayons et des orifices 18, l'embout 6 est également traversé par des trous 20 d'un diamètre voisin de celui des crayons.

L'embout 6 comporte donc trois sortes de perçages le traversant de part en part, les orifices de fixation des tubes guides, les lumières de passage des douilles creuses de fixation 16 de la plaque 14 et les trous 20 permettant le passage de l'eau de refroidissement du réacteur autour de la partie inférieure des crayons 1. Les douilles creuses 16 permettent également le passage de l'eau de refroidissement.

De même la plaque de fixation 14 comporte trois sortes de perçage la traversant de part en part, les trous de passage des tubes guides 7, les orifices 18 de fixation des crayons combustibles 1 et les trous taraudés pour le vissage des douilles 16.

La surface inférerieure de la plaque de fixation 14 présente d'autre part un ensemble de rainures 21 parallèles les unes aux autres et correspondant chacune à une rangée de crayons combustibles. Les orifices 18 de passage de la partie inférieure des crayons débouchent à leur partie inférieure à l'intérieur des rainures 21.

Comme il est visible sur la figure 1, la profondeur des rainures 21 correspond à la hauteur du rebord radial 15 ménagé sur les bouchons 2 des crayons combustibles 1. Dans le cas d'un assemblage pour réacteur nucléaire à rendement amélioré tel que décrit, cette profondeur est de 5 mm. La dimension dans la direction radiale des rebords 15 est de 2 mm.

La largeur des rainures 21 usinées sur la surface inférieure de la plaque 14 est choisie de façon que l'une des branches radiales de la partie inférieure du crayon soit perpendiculaire à l'axe de la rainure, comme il est visible sur la figure 2. Les trois branches étant à 120°, l'axe du crayon est quelque peu décalé par rapport au plan médian de la rainure, si bien qu'il est nécessaire de prévoir des embrèvements cylindriques 24 dans une paroi de la rainure, pour pouvoir effectuer la mise en place des crayons sur la plaque 14.

Dans le cas d'un assemblage ayant des crayons d'un diamètre de 8 mm, la largeur de la rainure est de 9,5 mm.

Nous allons maintenant décrire les opérations nécessaires pour le montage et la fixation des crayons dans l'assemblage.

On effectue ce montage sur un assemblage dont la structure comporte l'embout supérieur, les tubes guides et les plaques entretoises, l'embout inférieur n'étant pas encore mis en place.

On commence par la mise en place de la plaque de fixation 14 sur l'extrémité inférieure des tubes guides, la plaque 14 comportant un réseau de trous correspondant à la position de ces tubes guides. On enfile alors les crayons dans la plaque de maintien 14 et dans les grilles entretoises 5, ces crayons étant arrêtés par les rebords 15 des bouchons inférieurs 2 qui viennent buter sur le fond des rainures 21 usinées dans la plaque de fixation 14. Les crayons ne peuvent être mis en place que d'une seule façon dans les rainures qui assurent leur blocage en rotation.

On met alors en place l'embout inférieur 6 sur les extrémités des tubes guides, la plaque 14 venant alors reposer sur la surface supérieure de l'embout 6. On fixe alors l'embout inférieur sur les tubes guides grâce aux douilles filetées 9 qui sont bloquées en rotaion en fin de vissage dans l'extrémité des tubes guides.

On fixe alors la plaque 14 sur l'embout 6 grâce aux douilles filetées 16 qui sont également bloquées en rotation en fin de vissage grâce à la collerette 16$_c$ qui est déformée à l'intérieur d'embrèvements prévus dans l'embout 6.

Les crayons 1 sont alors parfaitement immobilisés dans l'assemblage tant en translation axiale qu'en rotation. Ces crayons sont maintenus latéralement par les grilles 5 qui ne comportent que des bossettes de maintien des crayons et non plus des ressorts en Inconel comme les grilles entretoises des assemblages de l'art antérieur.

Les essais de la demanderesse ont montré que les crayons ainsi fixés ne sont pas soumis à des régimes de vibration anormaux dans le réacteur en fonctionnement.

D'autre part, ces crayons sont parfaitement maintenus dans la direction axiale par la plaque de fixation 14. Cependant, la section de passage de l'eau de refroidissement dans l'assemblage reste importante grâce à la forme des bouchons inférieurs qui permet le passage de l'eau à travers l'embout et la plaque de fixation, dans une section comparable à la section du crayon et grâce aux douilles creuses 16.

Enfin, le démontage de l'embout inférieur et des crayons est extrêmement facile puisqu'il suffit de dévisser les douilles d'assemblage 16 de la plaque 14 et les douilles d'assemblage 9 des tubes guides 7. Au cours du dévissage, la colle-rette de la douille se déforme pour supprimer le blocage en rotation de ces douilles.

L'invention ne se limite pas au mode de réalisation qui vient d'être décrit; c'est ainsi qu'on peut concevoir d'autres moyens de fixation de la plaque 14 sur l'embout 6, à partir du moment où ces moyens de fixation permettent un démontage aisé comme les douilles qui ont été décrites.

On peut également concevoir une forme de la partie profilée du bouchon inférieur des crayons un peu différente de celle qui a été décrite, pourvu que cette forme permette une orientation et un blocage en rotation des crayons dans les rainures.

Enfin, l'assemblage suivant l'invention s'applique non seulement dans le cas des réacteurs nucléaires à rendement amélioré où le coeur comporte une couche de matériau fertile à sa partie supérieure et à sa partie inférieure, mais également dans le cas de tous les réacteurs nucléaires où l'on cherche à améliorer le bilan neutronique en diminuant la quantité de matériau absorbant les neutrons dans les assemblages combustibles.

**Revendications**

1. Assemblage combustible de réacteur nucléaire constitué par un faisceau de crayons combustibles (1) cylindriques sur une partie au moins de leur longueur, parallèles et maintenus par une structure constituée par des grilles entretoises (5) transversales par rapport aux crayons (1), par deux embouts d'extrémité (6) et (8) transversaux et par des tubes guides (7) reliés aux grilles entretoises (5) et aux embouts (6) et (8) se substituant à certains crayons (1) du faisceau et par une plaque de fixation (14) superposée à l'embout inférieur (6) et fixée sur celui-ci contre sa surface supérieure, comportant des orifices (18) sur toute son épaisseur, caractérisé en ce que les crayons (1) sont fixés à l'embout inférieur (6) par la plaque de fixation (14) dont les orifices correspondent chacun en diamètre et position à un crayon combustible (1) et débouchent dans des rainures parallèles (21) correspondant chacune à une rangée de crayons, usinées sur la surface inférieure de la plaque (14) qui est en contact avec l'embout (6), lui-même percé de trous (20) en face de chacun des crayons (1), et en ce que chaque crayon (1) comporte une partie inférieure (2) dont la section transversale présente au moins trois branches radiales (2a, 2b, 2c) à 120°, chacune des expansions radiales correspondantes se terminant vers le bas par un rebord (15) saillant dans la direction radiale par rapport au contour de la partie cylindrique du crayon (1), les crayons (1) traversant la plaque de fixation (14) de façon que les rebords inférieurs saillants (15), d'une hauteur sensiblement égale à la profondeur des rainures (21) soient disposés dans la rainure (21) correspondante pour leur blocage en rotation et leur fixation axiale entre l'embout (6) et la plaque de fixation (14).

2. Assemblage combustible suivant la revendication 1, caractérisé par le fait que la plaque de fixation (14) est fixée sur l'embout (6) par l'intermédiaire de douilles creuses filetées (16) placées à l'intérieur de lumières (17) traversant l'embout (6), vissées dans des trous taraudés de la plaque (14) et comportant une collerette déformable (16c) pour son blocage en rotation par déformation de la collerette dans des embrèvements prévus dans l'embout (6).

3. Assemblage combustible suivant l'une quelconque des revendication 1 et 2, caractérisé par le fait que les crayons combustibles (1) comportent, au-dessus du bouchon inférieur (2) et endessous du bouchon supérieur (3), respectivement, du matériau fertile sur deux zones (1$_a$) et (1$_b$) d'épaisseur faible par rapport à la longueur du crayon.

4. Assemblage combustible suivant l'une quelconque des revendications 1, 2 et 3, caractérisé par le fait que les grilles entretoises (5) ne comportent que des excroissances latérales ou bossettes pour le maintien transversal des crayons (1).

**Patentansprüche**

1. Brennstoffbündel eines Kernreaktors bestehend aus einem Bündel von Brennstäben (1), die über zumindest einen Teil ihrer Länge zylindrisch, parallel und durch eine Struktur gehalten sind, welche durch quer zu den Stäben (1) verlaufende Aussteifungsroste (5), durch zwei quer verlaufende Endhalterungen (6) und (8), durch Führungsrohre (7), die mit den Aussteifungsrosten (5) und mit den Halterungen (6) und (8) verbunden sind und bestimmte der Stäbe des Bündels (1) ersetzen, sowie durch eine Befestigungsplatte (14) gebildet ist, welche die untere Halterung (6) überlagert und an deren Oberseite befestigt ist, wobei sie über ihre gesamte Dicke Öffnungen (18) aufweist, dadurch gekennzeichnet, dass die Stäbe (1) an der unteren Halterung (6) mittels der Befestigungsplatte (14) fixiert sind, deren Öffnungen im Durchmesser und in der Lage jeweils einem Brennstab (1) entsprechen und in parallele Nuten (21) münden, welche je einer Reihe von Stäben entsprechen und auf der Unterseite der Platte (14) ausgebildet sind, welche mit der Halterung (6) in Berührung steht, die ihrerseits gegenüber jedem der Stäbe (1) von Öffnungen (20) durchsetzt ist, und dass jeder Stab (1) einen unteren Abschnitt (2) aufweist, dessen Querschnitt zumindest drei radiale Arme (2a, 2b, 2c) mit einem gegenseitigen Winkelabstand von 120° aufweist, wobei jede der entsprechenden radialen Erweiterungen nach unten in einem Rand (15) endet, der in radialer Richtung über die Kontur des zylindrischen Abschnittes des Stabes (1) vorspringt, und wobei die Stäbe (1) die Befestigungsplatte (14) derart durchsetzen, dass die vorspringenden unteren Ränder (15), deren Höhe im wesentlichen gleich der Tiefe der Nuten (21) ist, in der entsprechenden Nut (21) so angeordnet sind, dass sie drehfest und axial zwischen der Halterung (6) und der Befestigungsplatte (14) fixiert sind.

2. Brennstoffbündel nach Anspruch 1, dadurch gekennzeichnet, dass die Befestigungsplatte (14) an der Halterung (6) mittels hohler Gewindebuchsen (16) fixiert ist, die im Inneren von die Platte (6) durchsetzenden Öffnungen (17) angeordnet, in Gewindebohrungen der Befestigungsplatte (14) eingeschraubt sind und einen verformbaren Kragen (16c) zu ihrer Drehblockierung durch Verformung des Kragens in Ausnehmungen der Halterung (6) haben.

3. Brennstoffbündel nach Anspruch 1 oder 2, dadurch gekennzeichnet, dass die Brennstäbe (1) oberhalb eines unteren Endstückes (2) und unterhalb eines oberen Endstückes (3) in zwei Zonen (1a) und (1b), die im Vergleich zur Stablänge geringere Ausdehnung haben, brütbares Material aufweisen.

4. Brennstoffbündel nach einem der Ansprüche 1 bis 3, dadurch gekennzeichnet, dass die Aussteifungsroste (5) zur Querhalterung der Stäbe (1) lediglich seitliche Vorsprünge oder Buckel aufweisen.

## Claims

1. Nuclear reactor fuel assembly comprising a bundle of fuel rods (1) which are cylindrical on part at least of their length, which are parallel and which are maintained by a structure consisting of spacer grids (5) located transversely to the rods (1), two transversal end nozzles (6) and (8) and guide tubes (7) connected to the spacer grids (5) and nozzles (6) and (8) substituted for some rods (1) of the bundle and an attachment plate (14) superposed to the lower nozzle (6) and secured thereto against the upper surface thereof, comprising openings (18) throughout its thickness, characterized in that the rods (1) are secured to the lower nozzle (6) by the attachment plate (14) whose openings each have a diameter and a location corresponding to a fuel rod (1) and open into parallel grooves (21) each corresponding to a row of rods, the grooves being machined on the lower surface of the plate (14) which is in contact with the nozzle, the nozzle being formed with holes in alignment with the rods (1), and in that each rod (1) has a lower part (2) whose cross-section has at least three radial branches (2a, 2b, 2c) at 120°, each of the corresponding radial extension terminating downwardly as a flange (15) which projects radially from the outline of the cylindrical part of the rod (1), the rods (1) traversing the attachment plate (14) so that the projecting lower flanges (15), whose height is approximately equal to the depth of the grooves (21) are located in the corresponding groove (21) for being retained against rotation and being axially retained between the nozzle (6) and the attachment plate (14).

2. Fuel assembly according to claim 1, characterized in that the attachment plate (14) is fixed on the end nozzle (6) through threaded hollow bushes (16) which are positioned inside openings (17) penetrating the end nozzle (6), which are screwed into threaded holes in the plate (14) and which comprise a deformable skirt (16c) for locking in rotation by deformation of the skirt in grooves provided in the end nozzle (6).

3. Fuel assembly according to anyone of claims 1 and 2, characterized in that the fuel rods (1) comprise, above the lower plug ( ) and below the upper plug (3), respectively, fertile material in two zones (1a and 1b) of a small thickness relative to the length of the rod.

4. Fuel assembly according to anyone of claims 1, 2 and 3, characterized in that the spacer grids (5) comprise only lateral protuberances or small bosses for the transversal holding of the rods (1).

Fig 1

Fig 4

18

15    20

Fig 3

1

14    16b    18

15

6    16    16a    17    16c    17a    20

Fig 2

21

A

2b

18    2a

A

14

B    B

2c    21    24